# EUROPÄISCHE PATENTANMELDUNG

(11) **EP 2 281 654 A2**
(43) Veröffentlichungstag der Anmeldung: **09.02.2011**
(21) Anmeldenummer: 10008925.9
(22) Anmeldetag: 12.05.2007
(51) Int. Cl.: B23K 20/227, B23K 26/04, B23K 35/28, C23C 26/02, F16C 33/14

(54) **Gleitlager, Verfahren zur Herstellung sowie Verwendung eines derartigen Gleitlagers**

(30) Priorität: 17.05.2006 DE 102006023397
(62) Teilanmeldung aus: 07725153.6
(71) Anmelder: MAN DIESEL & TURBO, FILIAL AF MAN DIESEL & TURBO SE, TYSKLAND, 2450 København SV (DK)
(72) Erfinder: Benzon, Michael Eis, 3480 Fredensborg (DK)
(74) Vertreter: Munk, Ludwig

(57) **Zusammenfassung**

Bei einem Gleitlager mit wenigstens einem aus einem eisenhaltigen Grundwerkstoff bestehenden Tragteil (7), das laufflächenseitig mit einer zumindest radial außen aus einem zinnhaltigen Material bestehenden Beschichtung (8) versehen ist, die als aufgeschmolzene Lage ausgebildet und mit dem Grundmaterial durch eine FeSn₂ enthaltende Verbindungszone (9) metallurgisch verbunden ist, lässt sich dadurch eine hohe Lebensdauer erreichen, dass die Dicke der FeSn₂ enthaltenden Verbindungszone (9) höchstens 10 µm beträgt.

## Beschreibung

Die Erfindung betrifft gemäß einem ersten Erfindungsgedanken ein Gleitlager mit einem aus einem eisenhaltigen Grundwerkstoff bestehenden Tragteil, das laufflächenseitig mit einer wenigstens eine Lage aufweisenden, zumindest teilweise aus Lagermetall bestehenden Beschichtung versehen ist, wobei zumindest die dem Tragteil benachbarte Lage aus einem Sn enthaltenden Material, vorzugsweise Weißmetall, besteht, und mit dem Tragteil durch eine FeSn₂ enthaltende Verbindungszone metallurgisch verbunden ist.
Ein weiterer Erfindungsgedanke betrifft ein Verfahren zur Herstellung eines derartigen Gleitlagers, wobei ein aus einem eisenhaltigen Grundwerkstoff bestehendes Tragteil laufflächenseitig mit einer wenigstens eine Lage aufweisenden, zumindest teilweise aus Lagermetall bestehenden Beschichtung versehen wird, wobei zumindest die dem Tragteil benachbarte Lage aus einem Sn enthaltenden Material, vorzugsweise Weißmetall, besteht, das der zu beschichtenden Oberfläche in fester Form zugeführt und auf den Grundwerkstoff durch eine zu einer metallurgischen Anbindung führende Behandlung aufgebracht wird.
Ein weiterer Erfindungsgedanke enthält eine bevorzugte Verwendung eines derartigen Gleitlagers.

Aus der WO 00/23718 sind ein Gleitlager sowie ein Verfahren eingangs erwähnter Art bekannt. Gemäß diesem bekannten Vorschlag wird eine aus Weißmetall bestehende Beschichtung an das aus einem Eisenwerkstoff bestehende Tragteil anlegiert. Die Bildung einer Legierung erfordert das Vorhandensein flüssiger Legierungskomponenten. Hierzu muss dementsprechend beim Beschichtungsvorgang so viel Wärme freigesetzt werden, dass nicht nur das Weißmetall schmilzt, sondern auch an der laufflächenseitigen Oberseite des Tragteils ein aus geschmolzenem Grundwerkstoff bestehendes Metallbad erzeugt wird. Die so erzeugten Schmelzen von Weißmetall und Eisenwerkstoff können miteinander legieren, wobei in großem Umfang FeSn₂ entsteht. Hierbei entsteht dementsprechend eine vergleichsweise dicke Verbindungszone, die weitgehend aus FeSn₂ besteht. Diese Verbindungszone ergibt zwar eine gute metallurgische Verbindung zwischen dem Grundwerkstoff und der Beschichtung. FeSn₂ stellt jedoch ein sehr sprödes Material dar, so dass es bereits bei geringeren Belastungen der bekannten Lageranordnung zur Bildung von Rissen und zu Sprödbruch kommen kann. Hinzu kommt, dass im Falle einer ungünstigen Abkühlung eine Umwandlung des beschichtungsnahen Eisenwerkstoffs zu Martensit stattfinden kann, der ebenfalls sehr spröde ist, wodurch der vorstehend genannte Nachteil noch verstärkt wird. Bei der bekannten Anordnung ergibt sich infolge der hohen Sprödheit und geringen Streckfähigkeit innerhalb eines vergleichsweise dicken Zwischenbereichs eine vergleichsweise kurze Lebensdauer.

Es ist auch bekannt, eine aus Lagermetall wie Weißmetall bestehende Beschichtung im Schleudergußverfahren auf das Tragteil aufzubringen. Dabei unterbleibt zwar die Bildung eines aus geschmolzenem Grundwerkstoff bestehenden Metallbads. Bei der Erstarrung des im Schleudergussverfahren aufgebrachten Weißmetalls kann es jedoch zu einer Trennung der Legierungskomponenten kommen, indem zunächst aus Cu₆Sn₅ bestehende, nadelförmige Kristalle und dann aus SbSn bestehende kubische Kristalle ausfallen und schließlich die verbleibende, zinnreiche Matrix erstarrt. Die Dichte von Cu₆Sn₅ ist größer, diejenige von SbSn kleiner als die Dichte der länger flüssigen Matrix. Die Cu₆Sn₅ -Kristalle wandern dementsprechend nach radial außen und schwächen dabei den Bereich, mit dem die Weißmetall-Beschichtung an den Grundwerkstoff anschließt, was sich ungünstig auf die Lebensdauer auswirken kann.

Hiervon ausgehend ist es daher die Aufgabe der vorliegenden Erfindung, ein Gleitlager eingangs erwähnter Art unter Vermeidung der Nachteile der bekannten Anordnungen so zu verbessern, dass eine hohe Lebensdauer erreicht wird. Weitere Aufgaben der vorliegenden Erfindung bestehen in der Angabe eines einfachen und kostengünstigen Verfahrens zur Herstellung eines erfindungsgemäßen Gleitlagers sowie in der Angabe einer bevorzugten Verwendung des erfindungsgemäßen Gleitlagers.

Die auf das Gleitlager sich beziehende Aufgabe wird in Verbindung mit dem gattungsgemäßen Gleitlager dadurch gelöst, dass die Dicke der FeSn₂ enthaltenden Verbindungszone höchstens 10µm (Mikron) beträgt.

Dadurch, dass eine aus FeSn₂ bestehende Verbindungszone nicht völlig unterdrückt, sondern in einem geringen Umfang zugelassen wird, ergibt sich in vorteilhafter Weise eine gute metallurgische Anbindung der Beschichtung an den eisenhaltigen Grundwerkstoff des Tragteils und damit eine hohe Haftfestigkeit. Andererseits ist in Folge der geringen Dicke der aus dem spröden FeSn₂ bestehende Verbindungszone sichergestellt, dass die Verformungsfähigkeit des erfindungsgemäßen Gleitlagers insgesamt hierdurch nicht nennenswert negativ beeinflusst wird, so dass eine ausreichend hohe Sicherheit gegen Sprödbruch und Rissbildung gewährleistet ist.

Die auf das Verfahren sich beziehende Aufgabe wird in Verbindung mit dem gattungsgemäßen Verfahren gemäß einer ersten bevorzugten Variante dadurch gelöst, dass zumindest die erste Lage der Beschichtung durch Aufschmelzen auf den eisenhaltigen Grundwerkstoff aufgebracht wird, wobei die zum Aufschmelzen erfolgende Übertragung von Energie auf die zu beschichtende Oberfläche und auf das dieser zugeführte Beschichtungsmaterial so kontrolliert erfolgt, dass nur das Beschichtungsmaterial vollständig schmilzt, der Grundwerkstoff jedoch vollständig im erstarrten Zustand verbleibt.

Diese Maßnahmen ergeben in vorteilhafter Weise einen so geringen Wärmeeintrag in den Grundwerkstoff, dass die Bildung eines aus geschmolzenem Grundwerkstoff bestehenden Metallbads an der zu beschichtenden Oberfläche unterbleibt, sondern das Beschichtungsmaterial auf eine feste Metallunterlage aufgeschmolzen wird, wobei in Folge der vorhandenen Wärme eine Diffusion in Gang kommt, welche die erwünschte metallurgische Anbindung der Beschichtung an den Grundwerkstoff gewährleistet. Die Diffusionstiefe, die abhängig von der Erwärmung des Grundwerkstoffs ist, kann dabei auf einfache Weise so gesteuert werden, dass die hier als Folge der Diffusion erhaltene Verbindungszone innerhalb gewünschter Grenzen von höchstens 10 µm, vorzugsweise 0,5 - 5 µm liegt. Gleichzeitig können eine Martensitbildung im Bereich des Grundwerkstoffs sowie eine ungleichmäßige Kristallverteilung im Bereich der Beschichtung vermieden werden. Da in vorteilhafter Weise keine Zusatzstoffe erforderlich sind, kann als zinnhaltiges Material einfaches Weißmetall Verwendung finden. Eine vorteilhafte Ausgestaltung des erfindungsgemäßen Verfahrens kann darin bestehen, dass das zinnhaltige Beschichtungsmaterial Zink enthält. Dabei kann das früher zur Beeinflussung der Kristallbildung benötigte Cadmium entfallen, was die Umweltverträglichkeit erhöht.

Eine andere vorteilhafte Variante des erfindungsgemäßen Verfahrens kann darin bestehen, dass zumindest die erste Lage der Beschichtung durch Aufpressen, vorzugsweise in der Form von Aufrollen auf den eisenhaltaigen Grundwerkstoff aufgebracht wird. Auch hierbei bleibt der Wärmeeintrag in den Grundwerkstoff gering. Zudem gewährleistet diese Variante eine einfache, schnelle und kostengünstige Verfahrensdurchführung und damit eine hohe Wirtschaftlichkeit.

Vorteilhaft finden erfindungsgemäße Gleitlager bei Großmaschinen, wie Großmotoren insbesondere Zweitakt-Großdieselmotoren Verwendung, da hier die lange Lebensdauer besonders hohe Kosten spart.

Vorteilhafte Ausgestaltungen und zweckmäßige Fortbildungen der übergeordneten Maßnahmen sind in den Unteransprüchen angegeben.

Vorteilhaft kann die zu beschichtende Oberfläche des Grundwerkstoffs vor der Beschichtung gereinigt und/oder angeraut werden. Hierdurch wird die erwünschte Diffusion und dementsprechend die Ausbildung der durch Diffusion erhaltenen Verbindungszone begünstigt. Die Anrauung verhindert zudem die Reflexion eines Strahls, bzw. einer Strahlung, was die Kontrolle des Energieeintrags in den Grundwerkstoff erleichtert.

Eine weitere zweckmäßige Maßnahme kann darin bestehen, dass mehrere Lagen aufeinander aufgeschmolzen werden. Hierdurch ist sichergestellt, dass der erforderliche Energiefluss so gering wie möglich bleibt und dennoch eine vergleichsweise große Dicke der Beschichtung erreicht werden kann. Die Lagen können aus gleichem oder unterschiedlichem Material bestehen, was eine Anpassung der Lagereigenschaften an die Verhältnisse des Einzelfalls ermöglicht.

Zweckmäßig wird das Beschichtungsmaterial in Form aneinander anschließender Raupen auf den Grundwerkstoff aufgebracht, was eine einfache Kontrolle des Energieeintrags begünstigt. Hierdurch erzeugte Unebenheiten können einfach mittels eines weiteren Energieeintrages egalisiert werden, was die mechanische Nachbearbeitung erleichtert.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Ansicht eines mit einer Gleitlagerbüchse versehenen Kurbel- wellen-Hauptlagers eines Großmotors,
- Figur 2: einen schematischen Schnitt durch ein mit einer doppellagigen Weiß- metall-Beschichtung versehenes Tragteil eines Gleitlagers und
- Figur 3: eine Vorrichtung zur Beschichtung des Tragteils eines Gleitlagers mit Weißmetall.

Hauptanwendungsgebiet der Erfindung sind vergleichsweise große Lager, wie die Kurbelwellen-Hauptlager, Pleuelstangenlager, Drucklager, Propellerwellenlager und dergleichen von Großmotoren, beispielsweise von als Schiffsmotoren Verwendung findenden Zweitakt-Großdieselmotoren. Der Aufbau und die Wirkungsweise derartigen Motoren sind an sich bekannt.

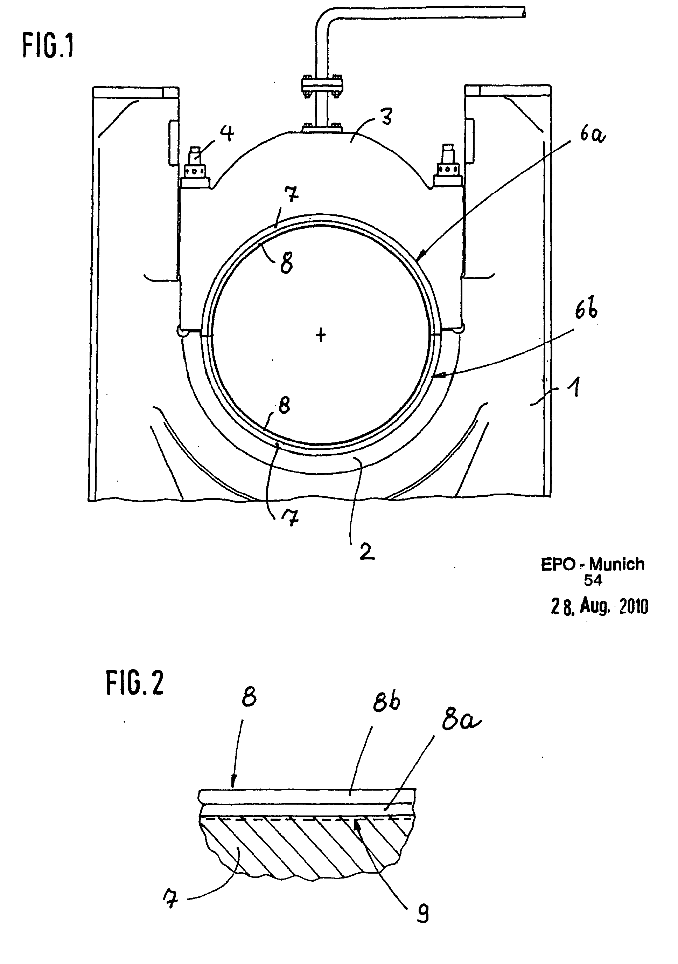

Das der Figur 1 zugrundeliegende Kurbelwellen-Hauptlager eines Zweitakt-Großdieselmotors besteht aus einem in das Motorgehäuse 1 integrierten Unterteil 2 und einem auf dieses aufsetzbaren Oberteil 3. Dieses wird durch Zuganker 4 gehalten. Das Unterteil 2 und das Oberteil 3 sind mit einander zu einer Bohrung 5 sich ergänzenden Ausnehmungen versehen, in die jeweils eine Halbschale 6a bzw. b einer geteilten Lagerbüchse eingesetzt ist, in welcher ein zugeordneter Zapfen einer hier nicht näher dargestellten Kurbelwelle gelagert ist. Der Austausch der Halbschalen 6a, 6b im Falle einer Reparatur ist sehr umständlich und aufwendig. Eine hohe Standzeit ist daher erwünscht.
Die Halbschalen 6a, b bestehen jeweils aus einem radial äußeren Tragteil 7, das laufflächenseitig also an der radial inneren Oberfläche, mit einer ein- oder mehrlagigen Beschichtung 8 versehen ist. Das Tragteil 7 besteht aus einem eisenhaltigen Werkstoff, in der Regel aus Stahl. Die Beschichtung 8 besteht zumindest im radial äußeren, dem Tragteil 7 benachbarten Bereich aus einem Sn-haltigen, eine gute Anbindung an das Tragteil 7 erbringenden Material und zumindest radial innen aus einem gute Notlaufeigenenschaften aufweisenden Material. Für beides eignen sich Weißmetalle. Als Weißmetalle werden in der Praxis Zinn-Legierungen bezeichnet.

Bei dem hier zur Bildung der Beschichtung 8 Verwendung findenden Weißmetall kann es sich um einfaches Weißmetall handeln, das nur Zinn (Sn), Antimon (Sb) und Kupfer (Cu) und vorzugsweise Zink (Zn) enthält. Der Zinkgehalt macht die Zugabe von sonstigen Zusätzen, wie Cadmium zur Erzielung einer Kristallisierung in der gewünschten Form entbehrlich.

Das die Beschichtung 8 bildende Material wird auf die radial innere Oberfläche der aus Stahl bestehenden Tragteile 7 in Form einer oder mehrerer Lagen aufgeschmolzen. Dabei wird im Grenzbereich zwischen dem eisenhaltigen Grundwerkstoff des Tragteils 7 und dem Lagermetall der Beschichtung 8 eine in Figur 2 durch eine unterbrochene Linie angedeutete Verbindungszone 9 gebildet, die im Wesentlichen aus FeSn₂ besteht, wobei das Eisen aus dem Grundwerkstoff und das Zinn aus der Beschichtung 8 stammen. Hierzu genügt es, wenn die Beschichtung zumindest in ihren radial äußeren , dem Tragteil 7 benachbarten Bereich aus zinnhaltigem Material besteht.

FeSn₂ erweist sich als sehr spröder Stoff, was die Lebensdauer der Halbschalen 6a, b ungünstig beeinflussen kann. Andererseits wird die Verbindungszone 9 aber benötigt, um eine zuverlässige metallurgische Anbindung der Beschichtung 8 an den eisenhaltigen Grundwerkstoff zu bekommen.

Durch umfangreiche Versuche wurde ermittelt, dass bei einer Dicke der aus FeSn₂ bestehenden Verbindungszone 9 von höchstens 10 µm (10 Mikron) sowohl eine gute metallurgische Anbindung der Beschichtung 8 an den eisenhaltigen Grundwerkstoff als auch eine noch ausreichende Verformungsfähigkeit der beschichteten Lagerschalen 6a, b und damit eine akzeptable Lebensdauer erreicht werden können. Die Versuche haben weiter gezeigt, dass bereits bei einer Dicke der Verbindungszone 9 von 0,5 - 5 µm eine ausreichende metallurgische Anbindung erreicht wird, wobei die Verformungsfähigkeit besonders gut ist.

Das Aufschmelzen des Beschichtungsmaterials erfolgt daher so, dass die Verbindungszone 9 nicht dicker als 10 µm, vorzugsweise nicht dicker als 0,5 - 5 µm wird. Hierzu wird der Aufschmelzvorgang so durchgeführt, dass die Verbindungszone 9 nicht durch Legieren der beteiligten Metalle gebildet wird, sondern durch einen Diffusionsvorgang. Dieser wird durch geeignete Wärmeführung so gesteuert, dass die Diffusionstiefe höchstens 10 µm, vorzugsweise höchstens 0,5 - 5 µm beträgt.

Hierzu wird die zum Aufschmelzen des Beschichtungsmaterials auf den eisenhaltigen Grundwerkstoff des Tragteils 7 angewandte Energie so gesteuert, dass an der zu beschichtenden Oberfläche des Tragteils 7 kein aus geschmolzenem Grundwerkstoff bestehendes Metallbad erzeugt wird, sondern der Grundwerkstoff vollständig im erstarrten Zustand bleibt und nur das Beschichtungsmaterial geschmolzen wird.

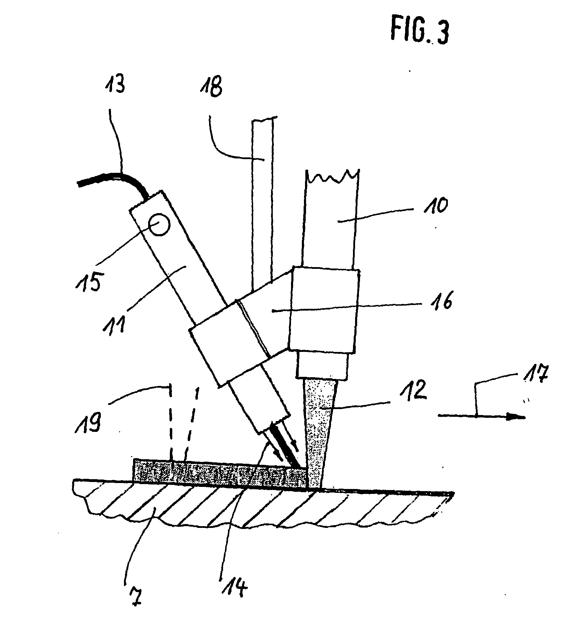

Zum Aufschmelzen der Beschichtung 8 auf den eisenhaltigen Grundwerkstoff findet zweckmäßig eine lokal wirksame, d.h. einen kleinen lokalen Heizfleck erzeugende Heizeinrichtung Verwendung. Hierzu kann die der Figur 3 zugrundeliegende Vorrichtung Verwendung finden. Diese enthält eine Laserquelle 10 und ein Material-Zuführaggregat 11. Die Laserquelle 10 erzeugt einen Laserstrahl 12, der etwa lotrecht zur zu beschichtenden Oberfläche des Tragteils 7 ausgerichtet ist. Das Zuführaggregat 11 ist gegenüber der Achse des Laserstrahls 12 geneigt. Der Neigungswinkel kann 20° - 45°, vorzugsweise 30° betragen. Mittels des Zuführaggregats 11 wird das Beschichtungsmaterial in festem Zustand der zu beschichtenden Oberfläche so zugeführt, dass es vom Laserstrahl 12 getroffen wird.

Das zuzuführende Beschichtungsmaterial kann in Form eines Pulvers oder in Form eines Bands oder Drahts vorliegen. Im dargestellten Beispiel wird das Beschichtungsmaterial in Form eines Drahts 13 zugeführt. Das Zuführaggregat 11 ist dementsprechend als Vorschubaggregat ausgebildet. Im Falle der Verwendung eines Metall-Pulvers ist das Zuführaggregat 11 als Blasdüse ausgebildet, die einen Pulverstrom abgibt. Zweckmäßig wird das Beschichtungsmaterial bis zur Erstarrung mit Schutzgas beaufschlagt, wie in Figur 3 durch Strömungspfeile 14 angedeutet ist. Vorteilhaft kann das Schutzgas über das Zuführaggregat 11 zugeführt werden, das mit einem geeigneten Versorgungsanschluss 15 versehen ist.

Die Laserquelle 10 und das Zuführaggregat 11 sind im dargestellten Beispiel an einem gemeinsamen Arbeitskopf 16 aufgenommen. Dieser ist so angeordnet, dass zur Durchführung des Beschichtungsvorgangs eine durch einen Pfeil 17 angedeutete Relativbewegung zwischen dem Arbeitskopf 16 und der zu beschichteten Oberfläche des Tragteils 7 erzeugt werden kann. Dabei werden die Relativgeschwindigkeit zwischen Arbeitskopf 16 und zu beschichtender Oberfläche sowie der vom Zuführaggregat 11 bewerkstelligte Materialdurchsatz sowie der vom Laserstrahl 12 bewerkstelligte Energieeintrag in das der zu beschichtenden Oberfläche zugeführte Beschichtungsmaterial sowie in die zu beschichtende Oberfläche des Tragteils 7 selbst so aufeinander abgestimmt, dass das zugeführte Beschichtungsmaterial vollständig schmilzt, dass aber an der zu beschichtenden Oberfläche kein aus geschmolzenem Grundwerkstoff bestehendes Metallbad entsteht, sondern ein Diffusionsvorgang mit der gewünschten Diffusionstiefe in Gang kommt.

Zweckmäßig erfolgt die Relativbewegung zwischen Arbeitskopf 16 und zu beschichtender Oberfläche so, dass die zu beschichtende Oberfläche vom Arbeitskopf 16 zeilenförmig abgefahren wird. Im dargestellten Beispiel ist der Arbeitskopf 16 hierzu an einem entsprechend bewegbaren Arm 18 angebracht. Infolge der zeilenförmigen Bewegung wird das Beschichtungsmaterial in Form von parallelen Raupen auf die zu beschichtende Oberfläche aufgebracht. Die hierbei sich ergebende, wellenförmige Oberseite kann durch einen zweiten, in Figur 3 durch unterbrochene Linien angedeuteten Laserstrahl 19 egalisiert werden. Die hierzu erforderliche Laserquelle kann ebenfalls am Arbeitskopf 16 angebracht sein. Es wäre aber auch denkbar, zur Erzeugung der Laserstrahlen 12 und 19 eine gemeinsame Laserquelle vorzusehen. Ebenso wäre es denkbar, auf einen zweiten Laserstrahl zu verzichten und die Egalisierung bei einem zweiten Durchgang ohne Zufuhr von Beschichtungsmaterial mittels des Laserstrahls 12 zu bewerkstelligen. Als Laserquellen sind solche besonders zu bevorzugen, die gut steuerbar sind, wie YAG-, CO₂-, Dioden-Laser, insbesondere fibergekuppelte Dioden-Laser. Die leichte Steuerbarkeit der Laserquelle erleichtert die genaue Dosierung des Energieeintrags in das Tragteil 7. CO₂- und Dioden-Laser haben sich hier besonders bewährt.

Zweckmäßig wird das Beschichtungsmaterial in Form dünner Lagen aufgetragen, was die Kontrolle des Wärmeeintrags erleichtert. Um dennoch eine größere Gesamtdicke der Beschichtung zu erreichen, können mehrere Lagen aufeinander aufgetragen werden, wie in Figur 2 durch die aufeinander aufgetragenen Lagen 8a, 8b angedeutet ist. Dabei können einander kreuzende Rampen erzeugt werden. In jedem Fall wird die oberste Lage in der vorstehend beschriebenen Weise egalisiert, was eine anschließende mechanische Nachbearbeitung erleichtert. Die Lagen 8a, b können aus gleichem Material oder unterschiedlichen Materialien bestehen. In jedem Fall muss die untere, d.h. radial äußere Lage zur Bildung der FeSn₂-Zone aus zinnhaltigem Material wie Weißmetall bestehen.

Vor Beginn des Beschichtungsvorgangs wird die zu beschichtende Oberfläche des Tragteils 7 gereinigt und vorzugsweise gleichzeitig angeraut. Diese Anrauung verhindert eine nennenswerte Reflexion des Laserstrahls 12, was die Kontrolle des Energieeintrags ebenfalls erleichtert.

Da mittels des Laserstrahls 12 nur eine kleinflächige Wärmebeaufschlagung erfolgt, kühlt das aufgeschmolzene Material vergleichsweise schnell ab. Eine Schwerkrafttrennung der bei der Abkühlung einer Weißmetallschmelze sich bildenden, eine unterschiedliche Dichte aufweisenden Kristalle in Form von Cu₆S-n₅-Kristallen und SbSn-Kristallen kann daher nicht in Gang kommen. Dementsprechend wird innerhalb der Beschichtung 8 oder jedenfalls innerhalb jeder aus Weißmetall bestehenden Lage 8a, b, eine über deren ganze Dicke gleichmäßige Verteilung dieser Kristalle und dementsprechend ein äußerst homogener Materialaufbau erreicht. Die Abkühlung des beschichteten Tragteils 7 kann so erfolgen, dass im eisenhaltigen Grundwerkstoff des Tragteils 7 keine Umwandlung in Martensit erfolgt, so dass der Grundwerkstoff auch in seinem die Beschichtung aufnehmenden Oberflächenbereich frei von Martensit ist.

Anstelle der bei der Ausführung gemäß Figur 3 als Heizeinrichtung Verwendung findenden Laserquelle können natürlich auch andere, einen Heizfleck erzeugende Heizeinrichtungen Verwendung finden. Eine bevorzugte Ausführung kann darin bestehen, zur Bildung der Heizeinrichtung eine Induktionsspule vorzusehen, die mit elektrischem Strom beaufschlagt wird, der vergleichsweise einfach steuerbar ist. Hierbei lässt sich daher der Wärmeeintrag in den Grundwerkstoff des Tragteils exakt dosieren.

Beim beschriebenen Beispiel findet eine geteilte Lagerschale Verwendung, deren Teile jeweils mit der erfindungsgemäßen Beschichtung 8 versehen werden. Es wäre aber auch möglich, die erfindungsgemäße Beschichtung 8 direkt auf das Lagerunterteil 2 bzw. Oberteil 3 aufzutragen. Die Erfindung kann daher auch überall dort Anwendung finden, wo keine Lagerschalen etc. vorgesehen sind.

Dem beschriebenen Ausführungsbeispiel liegt ein Kurbelwellen-Hauptlager eines Zweitakt-Großdiesel-Motors zugrunde. Die Erfindung kann natürlich, wie schon erwähnt, auch bei anderen Gleitlagern eines derartigen Motors, wie Pleuelstangenlagern, Drucklagern, Propellerwellenlagern, Kreuzkopfzapfenlagern udgl. Verwendung finden. Ebenso ist die Erfindung nicht auf die Anwendung bei Zweitakt-Großdiesel-Motoren beschränkt, sondern kann mit Vorteil auch bei anderen Motoren bzw. anderen Maschinen, wie Turbinen, Druckmaschinen, Walzwerken, Rollenbahnen etc. Verwendung finden. Besonders zweckmäßig ist die Anwendung bei Maschinen vergleichsweise großer Bauart.

Bei dem vorstehend anhand der Figur 3 beschriebenen Verfahren wird die Beschichtung 8 auf den Grundwerkstoff aufgeschmolzen. Anstelle dieses Verfahrens wäre es auch denkbar, zumindest eine dem Grundwerkstoff benachbarte Lage 8a der Beschichtung durch geeignetes Anpressen mit dem Grundmaterial zu verbinden, wobei durch den zur Anwendung kommenden Druck die gewünschte metallurgische Bindung in Form einer FeSn₂ enthaltenden Verbindungszone hervorgerufen wird. Zweckmäßig wird hier eine einlagige Beschichtung vorgesehen, die mit einem Pressvorgang auf den Grundwerkstoff aufgebracht werden kann. Bei mehreren Lagen können diese ebenfalls durch Pressung miteinander verbunden werden.

Der Pressvorgang kann zweckmäßig als Anrollvorgang gestaltet werden, wobei die Beschichtung unter Druck auf die zu beschichtende Oberfläche aufgerollt wird. Dabei wird das Beschichtungsmaterial, das aus Sn enthaltenden Material, vorzugsweise Weißmetall, besteht, der zu beschichtenden Oberfläche in fester Form, zweckmäßig in Form eines Streifens oder Bands zugeführt und dann mittels wenigstens einer Walze unter Druck auf den eisenhaltigen Grundwerkstoff der zu beschichtenden Oberfläche so aufgewalzt, dass eine FeSn₂ enthaltende Verbindungszone und damit eine metallurgische Anbindung der Beschichtung 8 an den Grundwerkstoff erreicht wird. Das zur Beschichtung zugeführte Band etc. kann ein- oder mehrschichtig sein. Im Falle einer über der Beschichtungsdicke aus gleichem Material bestehenden Beschichtung findet ein einschichtiges Band etc. Verwendung. Es wäre aber auch denkbar, innerhalb des Bands mehrere unterschiedliche Lagen vorzusehen, wobei jedenfalls die unterste Lage aus einem Sn enthaltenden Material, vorzugsweise Weißmetall bestehen soll.

Das vorgeschlagene Anrollverfahren ermöglicht in vorteilhafter Weise eine schnelle und kostengünstige Verfahrensdurchführung und damit eine hohe Produktivität und Wirtschaftlichkeit.

## Patentansprüche

1. Gleitlager mit wenigstens einem aus einem eisenhaltigen Grundwerkstoff bestehenden Tragteil (7), das laufflächenseitig mit einer wenigstens eine Lage (8a,b) aufweisenden, zumindest teilweise aus Lagermetall bestehenden Beschichtung (8) versehen ist, wobei zumindest die dem Tragteil (7) benachbarte Lage (8a) aus einem Sn enthaltenden Material, vorzugsweise Weißmetall, besteht und mit dem Grundmaterial durch eine FeSn₂ enthaltende Verbindungszone (9) metallurgisch verbunden ist, **dadurch gekennzeichnet, dass** die Dicke der FeSn₂ enthaltenden Verbindungszone (9) höchstens 10 µm beträgt.

2. Gleitlager nach Anspruch 1, **dadurch gekennzeichnet, dass** die Dicke der FeSn₂ enthaltenden Verbindungszone (9) höchstens 0,5 bis 5 µm beträgt.

3. Gleitlager nach einem der vorhergehenden Ansprüche, **dadurch gekennzeichnet, dass** die Dicke der Verbindungszone (9) der Diffussionstiefe einer auf eisenhaltigen Grundwerkstoff aufgeschmolzenen Sn enthaltenden Lage, vorzugsweise Weißmetall-Lage entspricht.

4. Gleitlager nach einem der vorhergehenden Ansprüche, **dadurch gekennzeichnet, dass** der Grundwerkstoff des Tragteils (7) zumindest in seinem die Beschichtung (8) aufnehmenden Bereich frei von Martensit ist.

5. Gleitlager nach einem der vorhergehenden Ansprüche, **dadurch gekennzeichnet, dass** jede Sn enthaltende Lage der Beschichtung (8) über ihrer Dicke eine homogene Struktur, insbesondere eine gleichmäßige Verteilung von Cu₆Sn₅-Kristallen und SbSn-Kristallen aufweist.

6. Gleitlager nach einem der vorhergehenden Ansprüche, **dadurch gekennzeichnet, dass** zumindest das im Bereich der Beschichtung (8) vorgesehene Sn-haltige Material, vorzugsweise die ganze Beschichtung (8), frei von Cadmium ist und statt dessen Zink enthält.

7. Gleitlager nach einem der vorhergehenden Ansprüche, **dadurch gekennzeichnet, dass** die Beschichtung (8) mehrere aufeinander angebrachte Lagen (8a, b) enthält.

8. Gleitlager nach einem der vorhergehenden Ansprüche, **dadurch gekennzeichnet, dass** zumindest die dem Tragteil (7) benachbarte Lage (8a), vorzugsweise alle Lagen (8a, b), der Beschichtung aus einem Weißmetall besteht, bzw. bestehen, das nur Zinn (Sn), Antimon (Sb) und Kupfer (Cu) und vorzugsweise Zink (Zn) enthält.

9. Gleitlager nach einem der vorhergehenden Ansprüche, **dadurch gekennzeichnet, dass** die Lagen (8a, b) der Beschichtung (8) zumindest teilweise aus unterschiedlichem Material bestehen.

10. Gleitlager nach einem der vorhergehenden Ansprüche, **dadurch gekennzeichnet, dass** das Tragteil (7) aus Stahl besteht.

11. Gleitlager nach einem der vorhergehenden Ansprüche, **dadurch gekennzeichnet, dass** das Tragteil (7) als in ein zugeordnetes Gehäuse einsetzbare Lagerschale (6a bzw. 6b) ausgebildet ist, die an ihrer radial inneren Seite die aus Lagermetall bestehende Beschichtung (8) aufweist.

12. Verfahren zur Herstellung eines Gleitlagers nach wenigstens einem der vorhergehenden Ansprüche, wobei wenigstens ein aus einem eisenhaltigen Grundwerkstoff bestehendes Tragteil (7) laufflächenseitig mit einer wenigstens eine Lage (8a, b) aufweisenden, zumindest teilweise aus Lagermetall bestehenden Beschichtung (8) versehen wird, wobei zumindest die dem Tragteil (7) benachbarte Lage (8a) aus einem Sn enthaltenden Material, vorzugsweise Weißmetall besteht, das der zu beschichtenden Oberfläche in fester Form zugeführt und auf den eisenhaltigen Grundwerkstoff durch eine zu einer metallurgischen Anbindung führende Behandlung aufgebracht wird, **dadurch gekennzeichnet, dass** zumindest die erste Lage (8a) der Beschichtung (8) durch Aufschmelzen auf den eisenhaltigen Grundwerkstoff aufgebracht wird, wobei die zum Aufschmelzen zumindest der ersten Lage (8a) der Beschichtung (8) erfolgende Übertragung von Energie auf die zu beschichtende Oberfläche und auf das dieser zugeführte Beschichtungsmaterial so kontrolliert erfolgt, dass nur das Beschichtungsmaterial vollständig schmilzt und der eisenhaltige Grundwerkstoff vollständig im erstarrten Zustand verbleibt.

13. Verfahren nach Anspruch 12, **dadurch gekennzeichnet, dass** mittels eines Diffusionsvorgangs im Grenzbereich zwischen Beschichtung (8) und Grundwerkstoff eine FeSn₂ enthaltende Verbindungszone (9) erzeugt wird.

14. Verfahren nach einem der vorhergehenden Ansprüche 12 oder 13, **dadurch gekennzeichnet, dass** die zu beschichtende Oberfläche des Grundwerkstoffs vor der Beschichtung gereinigt und/oder angeraut wird.

15. Verfahren nach einem der vorhergehenden Ansprüche 12 bis 14, **dadurch gekennzeichnet, dass** das zugeführte Beschichtungsmaterial der zu beschichtenden Oberfläche als Pulver und /oder Band und/oder Draht zugeführt wird.

16. Verfahren nach einem der vorhergehenden Ansprüche 12 bis 15, **dadurch gekennzeichnet, dass** zum Aufschmelzen zumindest der ersten Lage (8a), vorzugsweise alle Lagen (8a, b), der Beschichtung (8) eine einen Heizfleck erzeugende, gegenüber dem Tragteil (7) relativ bewegliche Heizeinrichtung, vorzugsweise wenigstens ein Laserstrahl (12) und/oder wenigstens eine Induktionsspule, verwendet wird.

17. Verfahren nach Anspruch 16, **dadurch gekennzeichnet, dass** das Beschichtungsmaterial der zu beschichtenden Oberfläche jeweils im bei der Energieübertragung erzeugten Heizfleck zugeführt wird.

18. Verfahren nach einem der vorhergehenden Ansprüche 12 bis 17, **dadurch gekennzeichnet, dass** das Beschichtungsmaterial jeweils in Form paralleler, aneinander anschließender Raupen auf den Grundwerkstoff aufgebracht wird.

19. Verfahren nach einem der vorhergehenden Ansprüche 12 bis 18, **dadurch gekennzeichnet, dass** die Oberseite wenigstens der letzten auf den Grundwerkstoff aufgeschmolzenen Lage (8b) vorzugsweise aller Lagen (8a, b) durch Energiezufuhr vergleichmäßig wird.

20. Verfahren nach einem der vorhergehenden Ansprüche 10 bis 19, **dadurch gekennzeichnet, dass** mehrere Lagen (8a, b) aus gleichem oder unterschiedlichem Material aufeinander aufgeschmolzen werden, wobei zumindest die erste Lage (8a) zinnhaltig ist.

21. Verfahren nach einem der vorhergehenden Ansprüche 10 bis 20, **dadurch gekennzeichnet, dass** das geschmolzene Beschichtungsmaterial jeweils bis zur Erstarrung mit Schutzgas beaufschlagt wird.

22. Verfahren nach einem der vorhergehenden Ansprüche 10 bis 21, **dadurch gekennzeichnet, dass** zur Bildung des Laserstrahls (12) ein CO₂- und/oder Dioden-Laser Verwendung findet.

23. Verfahren zur Herstellung eines Gleitlagers nach wenigstens einem der vorhergehenden Ansprüche 1 bis 11, wobei wenigstens ein aus einem eisenhaltigen Grundwerkstoff bestehendes Tragteil (7) laufflächenseitig mit einer waenigstens eine Lage (8a,b) aufweisenden, zumindest teilweise aus Lagermetall bestehenden Beschichtung (8) versehen wird, wobei zumindest die dem Tragteil (7) benachbarte Lage (8a) aus einem Sn enthaltenden Material, vorzugsweise Weißmetall besteht, das der zu beschichtenden Oberfläche in fester Form zugeführt und auf den eisenhaltigen Grundwerkstoff durch eine zu einer metallurgischen Anbindung führende Behandlung aufgebracht wird, **dadurch gekennzeichnet, dass** zumindest die dem Tragteil (7) benachbarte Lage (8a) der Beschichtung (8) auf den eisenhaltigen Grundwerkstoff des Tragteils (7) aufgepresst wird.

24. Verfahren nach Anspruch 23, **dadurch gekennzeichnet, dass** zumindest die im Tragteil (7) benachbarte Lage (8a) der Beschichtung (8) auf den eisenhaltigen Grundwerkstoff des Tragteils (7) unter Druck aufgerollt wird.

25. Verfahren nach Anspruch 23 oder 24, **dadurch gekennzeichnet, dass** das zumindest die dem Tragteil (7) benachbarte Lage (8a) der Beschichtung (8) bildende Beschichtungsmaterial der zu beschichtenden Oberfläche in Form eines Streifens oder Bands zugeführt wird, der bzw. das unter Druck aufgerollt wird.

26. Verwendung eines Gleitlagers nach einem der vorhergehenden Ansprüche bei einem wenigstens ein Gleitlager aufweisenden Großmotor, insbesondere Zweitakt-Großdiesel-Motor.

27. Verwendung nach Anspruch 26, **dadurch gekennzeichnet, dass** bei einem Großmotor, insbesondere Zweitakt-Großdiesel-Motor die Kurbelwellenlager und/oder Pleuellager und/oder Drucklager und/oder Kreuzkopfzapfenlager und/oder Propellerwellenlager als Gleitlager gemäß einem der vorhergehenden Ansprüche ausgebildet ist bzw. sind.
